# EUROPEAN PATENT SPECIFICATION

(11) **EP 1 152 610 B1**
(45) Date of publication and mention of the grant of the patent: **16.04.2003**
(21) Application number: 01118064.3
(22) Date of filing: 05.11.1996
(51) Int. Cl.: H04N 5/913

(54) **Method and apparatus for improving the effects of color burst modifications to a video signal**
Verfahren und Anlage zur Verbesserung des Effektes der Farbsynchronsignalveränderung in einem Fernsehsignal
Procédé et appareil pour améliorer les effets des modifications de la composante salve chrominance d'un signal vidéo

(30) Priority: 16.01.1996 US 10015 P; 29.01.1996 US 10779 P; 26.03.1996 US 14246 P; 28.06.1996 US 24393 P; 12.07.1996 US 21645 P
(43) Date of publication of application: 07.11.2001
(62) Divisional of application: 96939546.6
(73) Proprietor: Macrovision Corporation, Santa Clara, CA 95050 (US)
(72) Inventor: Wrobleski, William J., Sunnyvale, CA 94089 (US); Quan, Ronald, Cupertino, CA 95014 (US)
(74) Representative: Needle, Jacqueline

(56) References cited:
- DE-A- 2 924 453
- DE-A- 3 306 174
- US-A- 5 315 448

## Description

The present invention relates to a method and apparatus for processing a video signal.

Various copy protection techniques have been developed to modify a video signal so as to prevent copying or reduce the entertainment value of a copied videocassette (effectiveness) whilst the same signal produces a display on a television receiver or monitor with a minimum of, or no, visible artifacts. Generally, playback of a recording of such a signal is not possible or produces a signal that has significantly degraded entertainment value.

Copy protection is to be differentiated from video scrambling. Video scrambling means that the video signal is not viewable. A scrambled signal may be recordable, but unless it has been descrambled, the playback of such a recording is still unviewable.

A well known copy protection scheme for video signals is disclosed in US-A-4613603 which describes modifying an analog video signal to inhibit making of acceptable video recordings therefrom. Specifically, a plurality of pulse pairs are added to the otherwise unused lines of a video signal vertical blanking interval, each pulse pair being a negative-going pulse followed closely by a positive-going pulse. The effect is to confuse AGC (automatic gain control circuitry) of a VCR (video cassette recorder) recording such a signal, so that the recorded signal is unviewable due to the presence of an excessively dark picture when the recorded signal is played back.

Another copy protection scheme is disclosed in US-A-4577216 in which a color video signal is modified to inhibit the making of acceptable video recordings thereof. A conventional television receiver produces a normal color picture from the modified signal. However, the resultant color picture from a subsequent video tape recording shows variations in the color fidelity that appear as bands or stripes of color error. Colloquially the modifications are called the "Colorstripe™ system" or the "Colorstripe™ process".

The method of US-A-4631603 is generally used in analog video cassette duplication and various digital transmission and recorder playback systems such as DVD, DVCR and satellite services which use a digital set top decoder. The recorders used in video cassette duplication facilities are specially modified to operate without depending upon the AGC action and can thus record the copy protected signal. The Colorstripe™ system depends upon the color time base recording system of a video cassette recorder. It is not economically possible to modify duplicating video cassette recorders to record a signal having the Colorstripe™ system, and so this system is used primarily in transmission systems; on the output of DVD recorders and playback machines; and on the output of DVCR machines.

Color video signals (both in the NTSC and PAL TV systems) include what is called a color burst. The color stripe system modifies the color burst. The suppression of the color subcarrier signal at the TV transmitter requires that the color TV receiver include an oscillator (in NTSC a 3.58 MHz oscillator) (in PAL a 4.43 MHz oscillator) which is used during demodulation to reinsert the continuous color subcarrier signal and restore the color signal to its original form. Both the frequency and phase of this reinserted subcarrier signal are critical for color reproduction. Therefore, it is necessary to synchronize the color TV receiver's local 3.58 MHz or 4.43 MHz oscillator so that its frequency and phase are in step with the subcarrier signal at the transmitter.

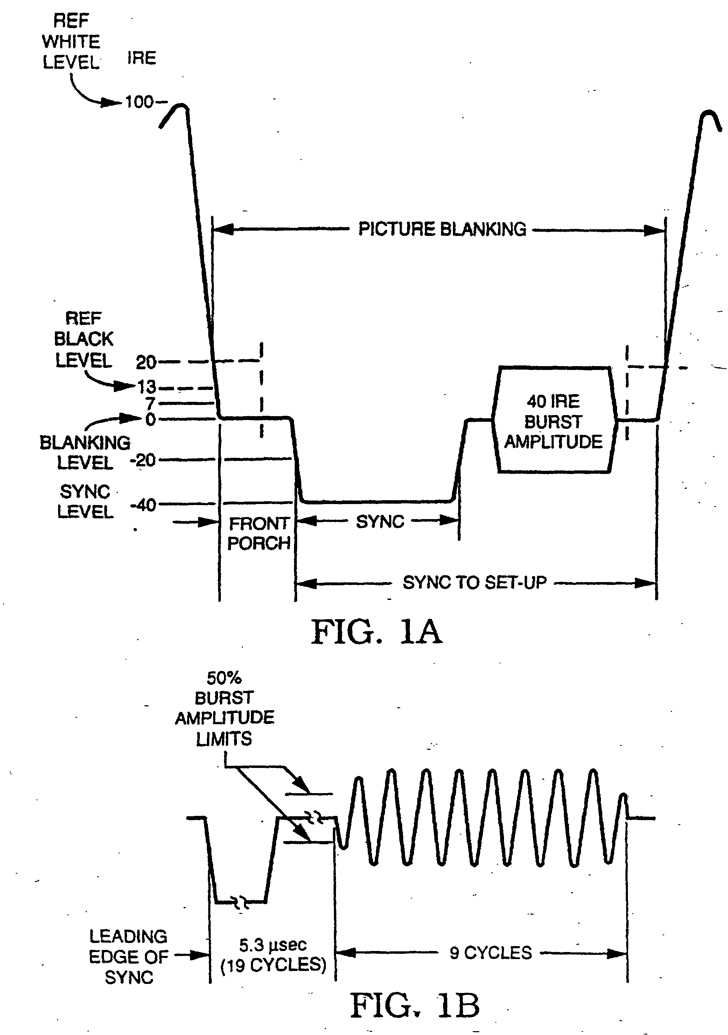

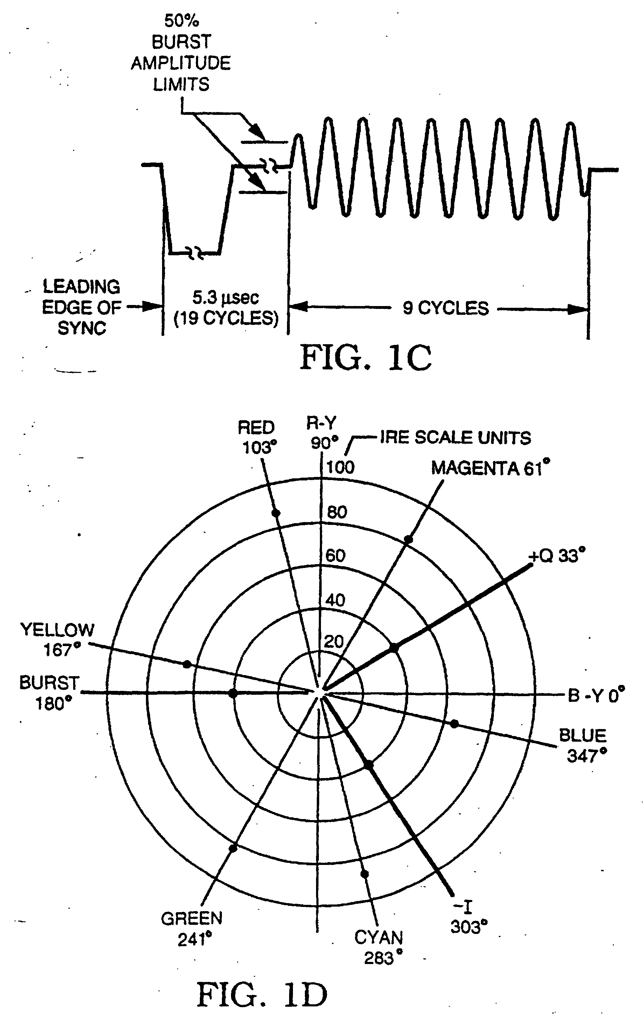

This synchronization is accomplished by transmitting a small sample of the transmitter's 3.58 MHz or 4.43 MHz subcarrier signal during the back porch interval of the horizontal blanking pulse. Figure 1A shows one horizontal blanking interval for an NTSC color TV signal. Figures 1 B and 1C show the details of the color burston two lines of the video signal. The phase of the color burst on successive lines in the NTSC are 180 degrees out of phase with each other. The horizontal sync pulse, the front porch and blanking interval duration are essentially the same as that for black and white TV. However, during color TV transmission (both broadcast and cable) 8 to 10 cycles of the 3.58 MHz (in NTSC) subcarrier that is to be used as the color sync signal are superimposed on the back porch. This color sync signal is referred to as the "color burst" or "burst". The color burst peak-to-peak amplitude (40 IRE for NTSC TV as shown) is generally the same amplitude as the horizontal sync pulse.

Figure 1B shows an expanded view of a part of the waveform of Figure 1A including the actual color burst cycles. During the color TV blanking intervals, such a color burst is transmitted following each horizontal sync pulse. Similar charateristics for the horizontal blanking interval and color burst are present in a PAL signal. The differences between PAL and NTSC are discussed more fully below.

The phase relationship of the color burst and the color components of an NTSC signal are shown in Figure 1D. The NTSC color system operates on a quadrature modulation system based upon an R-Y and B-Y or an I and Q system. For ease of discussion, we will discuss the R-Y and B-Y system. As can be seen on Figure 1D, the R-Y axis is the vertical axis and the B-Y axis is the horizontal axis. The color burst signal has been specified to be on the B-Y axis and is at the 180 degree point relative to a 0 degree point as shown in Figure 1D. The color modulation demodulation process depends upon this phase relationship between the various color components shown in the vector diagram of Figure 1D and the reference subcarrier represented by the color burst signal. The color stripe system referred to above modifies this phase relationship to create a copy protected signal which is able to produce a recording of the signal that has lost its entertainment value whilst the copy protected signal can be displayed without artifacts by a TV receiver or monitor (playability).

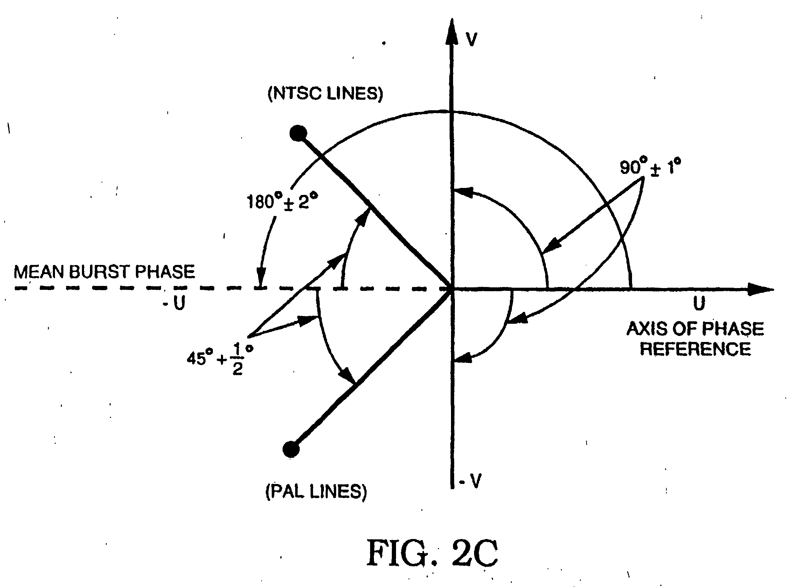

The phase relationship of the color burst and the color components of an unmodified PAL signal are shown in Figure 2C. The PAL color system, like its NTSC counterpart, operates on a quadrature modulation system based upon an U axis and V axis. As can be seen on Figure 2C the V axis is the vertical axis and the U axis is the horizontal axis. One of the key differences between the NTSC color system and the PAL TV system is the vector location of the color burst. The PAL color burst signal has been specified to be at +/- 45 degrees from the -U Axis relative to a 0 degree point as shown on Figure 2C. On an alternating line basis, the V signal switches 180 degrees in phase. The color burst of each of these switches in synchronization. On the lines with a + V signal, the color burst is at +45 degrees relative to the U axis. On the lines with a -V signal, the color burst is at -45 degrees relative to the U axis. The color modulation demodulation process depends upon this phase relationship between the various color components shown in the vector diagram of Figure 2C and the reference subcarrier represented by the color burst signal. The so called swinging burst is used to generate a PAL ID pulse within the demodulation process to appropriately switch the demodulation process to respond to the line by line change in the V portion of the signal.

In embodiments of the color stripe process, no color burst phase (stripe) modification appears in the video lines that have a color burst signal during the vertical blanking interval. These are lines 10 to 21 in an NTSC signal and corresponding lines in a PAL signal. The purpose of keeping these lines modified is to improve the playability of the modified signal. Since these lines are not visible on the playback of a recording there is no improved effectiveness to be achieved by modifying these lines. The previous commercial embodiments of the color stripe modifications (modulation of the color burst phase) have occurred in bands of four to five video lines of the viewable TV field followed by bands of eight to ten video lines without the color stripe modulation. The location of the bands is fixed ("stationary") field-to-field. This color stripe process has been found to be quite effective for cable television, especially when combined with copy protection in the form of added pulse pairs, as discussed above.

In NTSC TV, the start of color burst is defined by the zero-crossing (positive or negative slope) that precedes the first half cycle of subcarrier (color burst) that is 50% or greater of the color burst amplitude. It is to be understood that the color stripe process shifts the phase of the color burst cycles relative to their nominal (correct) position which is shown in Figure 1B. The phase shifted color burst is shown in Figure 1D. The amount of phase shift shown in Figure 1C may be as great as 180° (the maximum possible).

Further, the amount of phase shift in the color stripe process can vary from e.g. 20° to 180°; the more phase shift, the greater the visual effect in terms of color shift. In a color stripe process for PAL TV, a somewhat greater phase shift (e.g. 40° to 180°) is used to be effective.

In any copy protection system there is a need to properly balance the effectiveness of the copy protected signal in making a deteriorated copy against the need for no visible effects when playing the copy protected signal. However, certain television sets may produce slight playability problems when displaying a signal copy protected by a color stripe process. In particular, the visibility of the color stripe on a television receiver has been found to be particularly noticeable in certain "picture in picture" portions of the TV display. These systems use analog to digital conversion and digital to analog conversion techniques to accomplish the picture in picture feature which may be sensitive to the phase errors of color stripe techniques.

Known copy protection schemes, as US-A-4577216 have been described above. DE-A-2924453 is another example of a scheme in which the burst signal is phase shifted for copy protection.

The present invention seeks to provide a method and apparatus for inhibiting the making of an acceptable video recording of a video signal which improves on current methods.

According to a first aspect of the present invention there is provided a method of inhibiting the making of an acceptable video recording of a PAL video signal, the video signal including a plurality of video lines, each video line including a color burst having a predetermined duration and phase, the method being characterized by the steps of:
modifying the phase of the color burst so that the average of the phase vectors of a plurality of lines having said modified signals is nearly 180° opposite the average of the phase vectors of a plurality of lines having the proper color burst signals, whereby making of an acceptable video recording of the video signal is inhibited.

The invention also extends to apparatus for restricting analog recording of a digital video signal which has been pre-recorded on a medium and is played back and output as an encoded analog video signal, the apparatus being characterized by:
an integrated circuit implementation to add copy-prevention signals whose phases are controlled so that the average of the phase vectors of proper color burst signals that are originally placed on a plurality of lines is nearly 180° opposite the average of the phase vectors of modified color burst signals in a plurality of lines for a plurality of consecutive lines of said analog video signal.

In an embodiment, the modified lines comprise a phase shift of either + 90 degrees relative to the burst phase angle of a normal line or- 90 degrees relative to the burst phase of the burst phase of a normal line. The differences between various PAL embodiments is the sequence of line modifications.

It is understood that in each of these embodiments it has been found that it is not necessary to modify or modulate all of a particular colour stripe burst.

Embodiments of the present invention will hereinafter be described, by way of example, with reference to the accompanying drawings, in which:
Figures 1A to 1C show standard NTSC TV waveforms;
Figure 1D shows a vector diagram of an unmodified NTSC signal;
Figure 2A shows a standard PAL TV waveform;
Figures 2B and 2C show a vector diagram of an unmodified PAL signal;
Figures 3A to 3E show waveforms illustrating various versions of a split colour burst system;
Figures 4A and 4B show waveforms illustrating various versions of an advance split burst in a color stripe process;
Figures 5A to 5E show waveforms illustrating various versions of a color stripe process;
Figures 6A to 6C show waveforms of a colour stripe process using a split burst concept without any modified burst;
Figure 7 illustrates an embodiment in which the processes as described in Figures 3A to 3C, Figures 4A and 4B, and Figures 5A to 5C are combined;
Figures 8A to 8D are vector diagrams illustrating a first PAL embodiment of a color stripe process of the invention;
Figure 9 shows a series of vector diagrams illustrating a second PAL embodiment of a color stripe process of the invention;
Figure 10 shows a waveform of an embodiment of a PAL version of the invention;
Figure 11 shows a waveform illustrating a further embodiment of a PAL color stripe process;
Figure 12 shows a still further embodiment of a PAL color stripe system; and
Figures 13A and 13B show block diagrams illustrating apparatus for implementing various embodiments of the color stripe process.

The following describes methods and apparatus for modifying a color video signal such that a conventional television receiver produces a normal color picture, including a picture in picture portion from the modified signal, whilst a videotape recording made from the modified signal exhibits annoying color interference, thus discouraging or inhibiting videotaping of the signal.

It has been found that it is not necessary to modify or modulate all of a particular color stripe burst. It has been found that modifying or modulating only a portion of a color stripe burst is still effective as a copy protection signal for a typical VCR. Also, it has been found that reducing the portion of the burst that is modified or modulated improves the playability of the copy protected signal on television receivers and monitors. This modification or modulation of only a portion of a specific color burst signal is colloquially called a split color burst signal. Variations of this split color burst concept are described below.

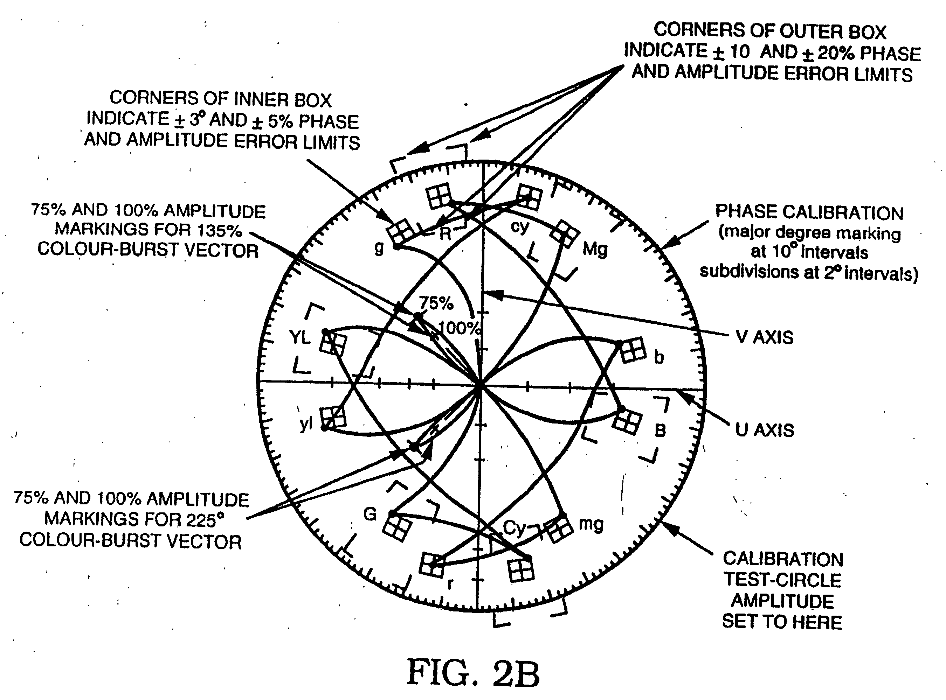

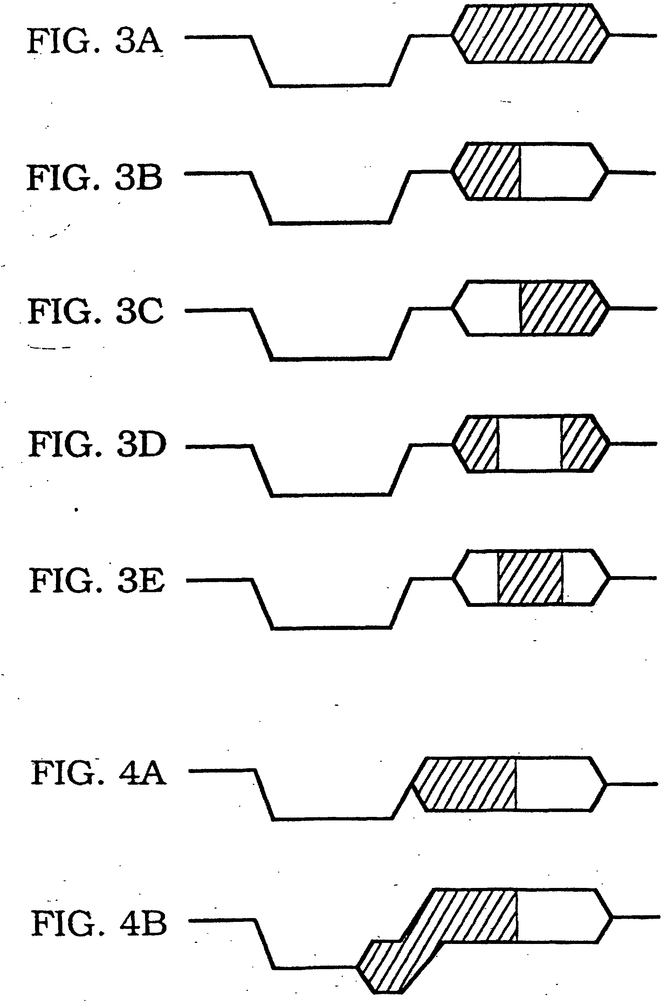

Figures 3A to 3E show various versions of a split color burst signal which are contained within the standard position of a color burst signal. This standard position of a color burst signal is shown in Figure 1D (for NTSC) and Figures 2B and 2C (for PAL).

Figure 3A shows a color burst with a full burst modification or modulation (the hatching denotes a modified burst signal). Figure 3C shows a color burst signal with approximately half of the first portion of the normal burst duration unmodulated and the remaining portion of the normal color burst duration having a modified or modulated burst phase as indicated by the hatching. The amount of phase modification may be as little as 20 degrees from normal phase to a maximum of 80 degrees from normal phase.

As stated above, the replacement may be of only a portion of a particular color burst. For instance, of the standard eight to ten cycles of NTSC color burst, the first five cycles, the last five cycles, or any other group of, for example four to six cycles may be replaced. The replaced cycles need not be consecutive; for example, alternate cycles may be replaced, leaving "good" (corrected) cycles interspersed with "bad" (color stripe) cycles. It also is possible to add corrected color burst cycles outside of their normal location and overlying the horizontal sync pulses, since these will be detected by a VCR.

It is to be noted that the partial replacement of a color burst is also applicable to other of the embodiments described below.

Figure 3B shows an example of a split color burst where the modified portion is within a first portion of the normal color burst duration and the unmodified portion is in the later portion of the normal burst duration.

Figures 3D and 3E show examples where the unmodified color burst and modified color burst portions are positioned in a sandwich manner within the normal color burst duration. Thus, Figure 3E shows an arrangement in which the unmodified portions are at the ends of the normal burst duration, with the modified portion in the middle. The amount of modified portion versus unmodified portion is adjusted to provide an optimum balance between effectiveness and playability as discussed above.

Figure 3D shows another example in which unmodified color burst and modified color burst portions are positioned in a sandwich manner within the normal color burst duration. In Figure 3D, the modified or modulated portions are at the ends of the normal burst duration with the unmodified portion in the middle. The amount of modified or modulated portions versus the unmodified or unmodulated portion is adjusted for an optimum balance between effectiveness and playability as discussed above.

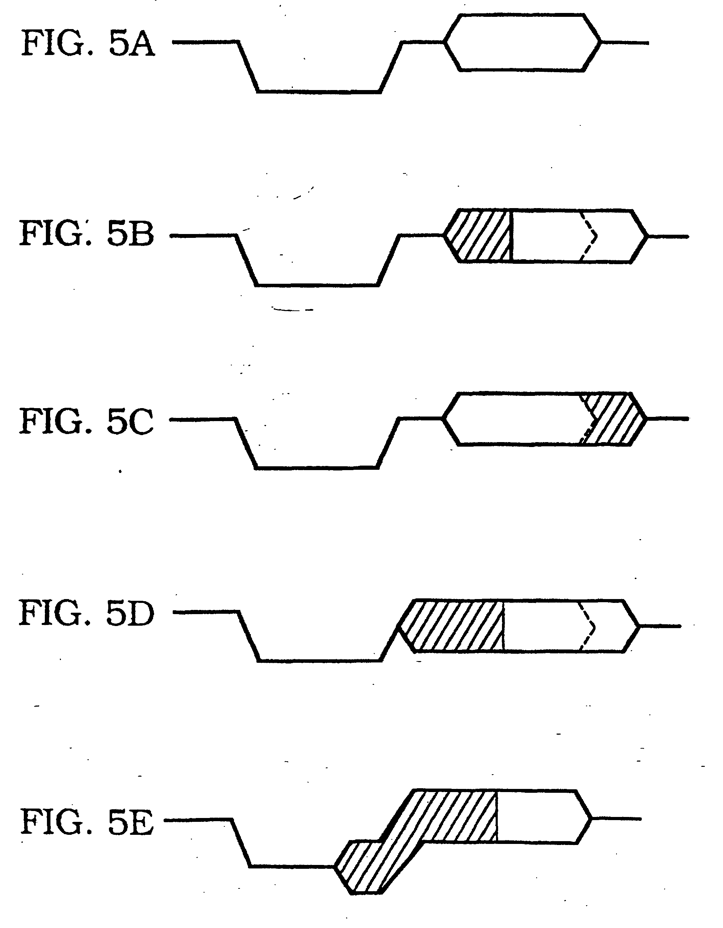

Figures 4A and 4B show examples of the color stripe process colloquially referred to as advance split burst. In this respect, it has been determined that playability may be improved by advancing the area within the back porch where the color burst (modified or unmodified) would exist.

Figure 4A shows a basic combination of the advanced concept with a split color burst. In this particular example, the burst envelope is extended forward to the trailing edge of horizontal sync. As shown in Figure 4A, the color burst comprises a modified or modulated color burst from the trailing edge of sync through and into a portion of the normal burst duration. The remainder of the normal burst duration has an unmodified burst portion.

Figure 4B shows another example of an advanced split color burst. In this example, the color burst envelope begins during the horizontal sync duration and continues into the normal color burst duration. As previously, the remaining color burst signal within the normal color burst duration is an unmodified color burst.

An advantage of the advanced split color burst in the NTSC system is that the detection area of the color burst signal in a VCR tends to be closer to the trailing edge of horizontal sync than does the detection area of the color burst in a television receiver or monitor. Thus, in the NTSC system with an advanced split color burst, a VCR tends to lock onto a modified signal whilst a television receiver tends to lock onto an unmodified signal.

Figures 4A and 48 show the provision of an advanced split color burst with the unmodified or unmodulated version in the latter portion of the advanced color burst. It is possible to combine the advanced split color burst with a "sandwich" arrangement as discussed above.

Figures 5A to 5E show other embodiments of the split color burst system. As described with reference to Figures 4A and 4B, there are advantages to having the normal burst envelope extended forwardly. Figures 5D and 5E show further examples where the normal burst envelope is extended forwardly, and this may be to a point extending as far as the front porch area of the horizontal blanking area. It has also been found to be advantageous to extend the normal color burst envelope beyond the normal burst period towards the active picture area. This extension of the normal is limited only by the maximum horizontal blanking area and the start of active video. Figure 5A shows a normal unmodified color burst. Figure 5B shows an extended color burst on which is marked an indication of the end of the normal color burst. The extended period may have normal color burst or modified or modulated color burst. Figure 5C shows an example of a color signal in which the earlier portion contains normal color burst and the latter portion, including the extended portion, contains modified or modulated color burst. Figure 5D shows the reverse. The point at which the switching between modified color burst and unmodified color burst occurs is variable and may be determined experimentally to result in the maximum balance between effectiveness and playability as discussed above.

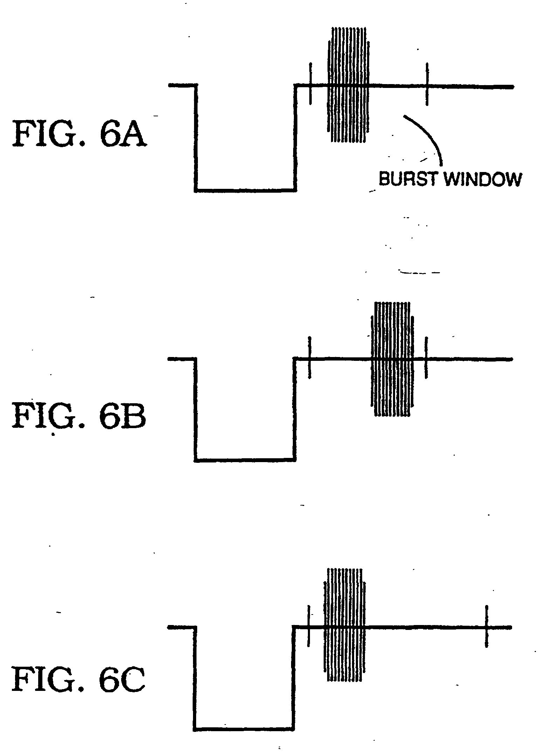

Figures 6A to 6C illustrate examples where the color burst is modified but there is no area of modified burst. However, the concept of split color burst prevails when the width of the normal color burst envelope is narrowed. In this embodiment, the number of cycles of color burst is reduced. As shown in Figures 6A to 6C, the shortened color burst is varied in its position within the normal color burst window. On the lines containing this modification, disturbances to the color fidelity will occur in a recording of the signal, but the playability within a TV receiver or monitor is maintained.

Each of the embodiments described with reference to Figures 3A to 3E, Figures 4A to 4B, Figures 5A to 5E, and Figures 6A to 6C is applicable to the NTSC color format and to the PAL color format.

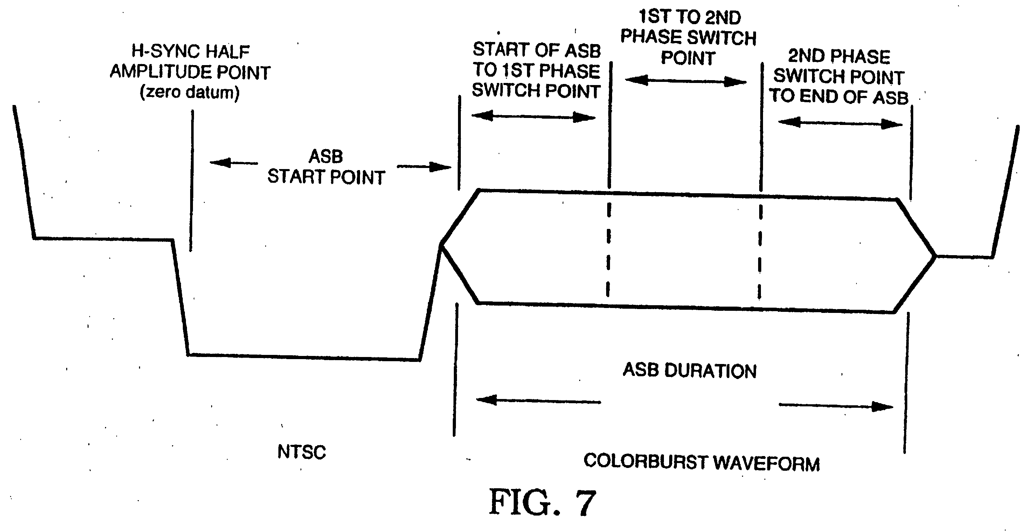

Figure 7 shows an example of an NTSC embodiment which combines elements of the embodiments described above. The embodiment illustrated in Figure 7 is referred to as an advanced switched burst (ASB) and has the capability of programming various combinations of the embodiments described above. The burst envelope comprises three zones. Zone 1 (burst start) beginning 4.96 µsecs. after the leading edge of horizontal sync. Zone 1 ends 1.48 µsecs after normal burst start. Zone 2 begins and ends at the end of Zone 1. In this particular embodiment, there is no Zone 2 per se. Zone 3 begins after the Zone 2 point and extends 1.48 µsecs. to the end of burst. Therefore, in this particular embodiment, the color burst has a width of 4.96 µsecs. The Zone 1 area will contain modified (inverted 180°) subcarrier. Normal phase subcarrier is used in Zone 2 (zero duration) and Zone 3.

As discussed above, the number of lines containing modified or inverted subcarrier in the color burst area is limited to groups of lines followed by larger groups of lines not containing modified or inverted subcarrier in the color burst. The examplary embodiment discussed above is available in two basic versions. One is called the 2 line version and the second is called the 4 line version. Table 1a shows the exemplary embodiment of Colorstripe™ measurements for NTSC. Table. 1b shows both line number configurations. Other combinations are possible. The exemplary embodiment is the result of experimental work towards finding an optimal mix of playability and effectiveness as discussed above.

**TABLE 1a**

| Summary of 525/60/NTSC Measurements | |
|---|---|
| Parameter | Measurement (∓S) |
| Burst Normal Start Point (Colorstripe Line) | 5.3 ±0.15 |
| Burst Advanced Start Point (Colorstripe Line) | 4.96 ±0.15 (Note 1) |
| Envelope Rise Time 10% - 90% | 0.3 +0.1/-0.2 |
| Burst Start to First Phase Switch Point | 1.48 ±0.07 |
| First to second phase switch points | 0 |
| Second Phase Switch Point to end of burst | 1.48 ±0.15 (Note 1) |
| Envelope Fall Time 10% - 90% | 0.3 +0.1/-0.2 |
| Note 1:Start and End points must be such that total burst duration for the default configuration is 2.96 +0.15/-0.07 | |

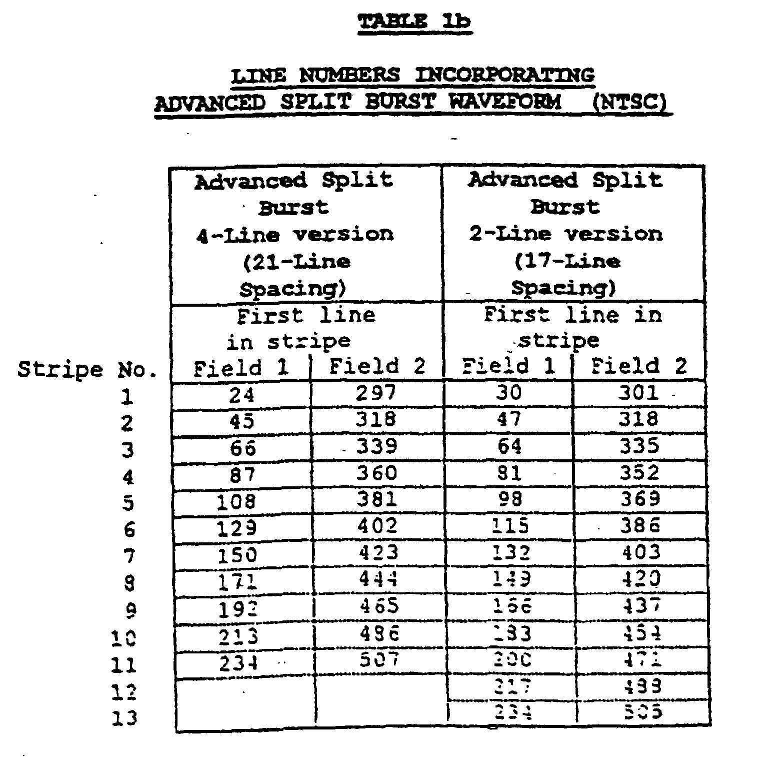

The embodiments described and illustrated are applicable to the PAL system as well as to the NTSC system. However, since the PAL system uses the color burst in a slightly different way from NTSC, four embodiments of PAL only color stripe systems are described below.

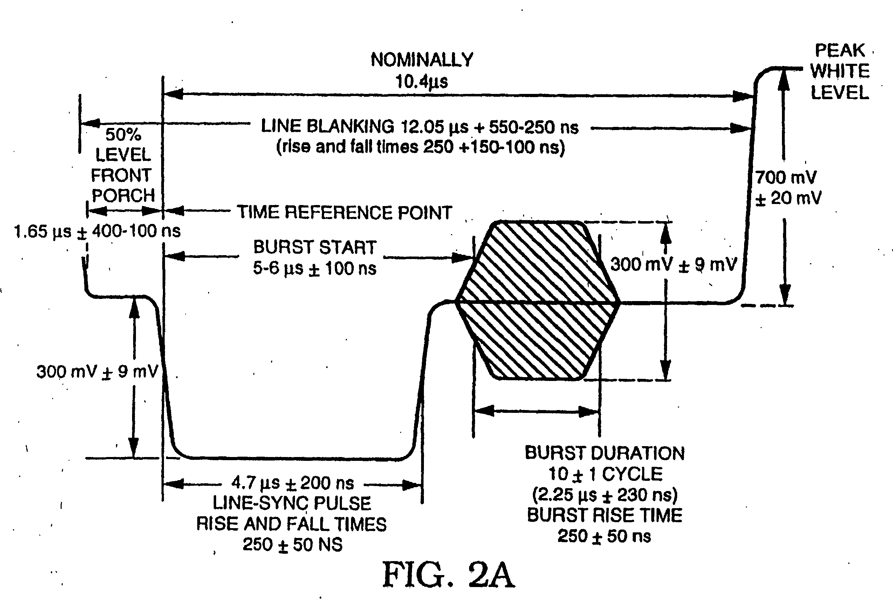

The standard PAL color signal has several significant differences from the standard NTSC signal. Some of these differences are related to the scanning standard used. These scanning differences create the need for a different subcarrier frequency. However, the most significant difference is the use of the swinging burst and the alternating phase relationships between adjacent lines within a field. Figure 2A shows one horizontal blanking interval for a PAL color TV signal. Figure 2B and Figure 2C show a vector display of a color bar signal color burst detail in a PAL system. It will be understood that there is a 180 degree change in the V component of every color component on a line by line basis. Additionally, and as can be seen from Figure 2C, there is a corresponding phase change in the color burst signal on a line to line basis. The color burst component and color components that occur when the burst is at the +45 degree point relative to the U Axis are the so called NTSC lines. The color burst component and color components that occur when the burst is at the -45 degree point relative to the U Axis are the so called PAL lines.

In the NTSC system the phase of the color burst is 180 degrees to the color signals 0 degree phase reference. For a PAL signal, however, the color burst also has to identify the V portion of the subcarrier phase which is switched during transmission by 180 degrees on alternate lines. The burst phase is therefore also switched on alternate lines and is at 135 degrees on NTSC lines and 225 degrees on PAL lines. The PAL line identification at the receiver may then be achieved by the phase detection of the 180 +/- 45 degree switched or swinging burst. As can be seen in Figure 2B the chroma signal switches about the U Axis such that, for example, a blue signal appears at approximately 350° relative to 0° on the line when color burst is at 135°. A blue signal is at approximately 10° relative to 0° on the line when the color burst is at 225°.

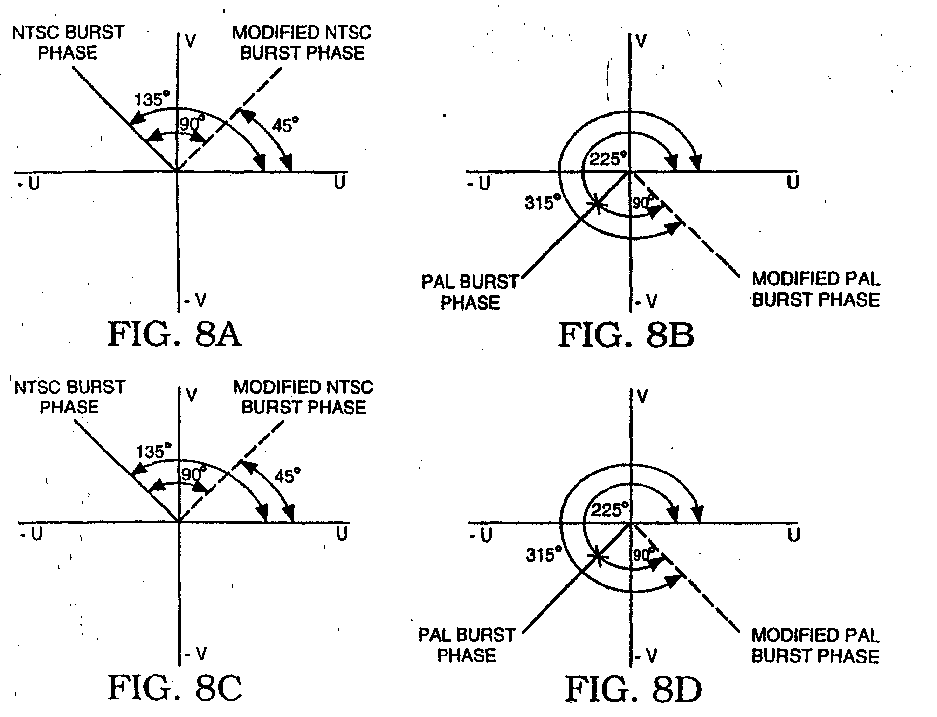

One embodiment utilizes the four line color stripe group as discussed above. In an unmodified signal, the first line of such a four line group would have a so-called NTSC burst angle of 135 degrees as shown in Figure 8A. The second line of the four line group would have a so-called PAL burst angle of 225 degrees as shown in Figure 8B. The same pattern repeats in the third and fourth lines of the four line pattern. The remaining lines follow the same normal pattern.

However, in the embodiment, the phase angles in the four line pattern are modified as shown by dotted lines in Figures 8A to 8D. The so-called NTSC burst angle of line 1 and 3 are moved 90 degrees to an angle of 45 degrees. The so called PAL burst angle of lines 3 and 4 are moved 90 degrees to 315 degrees. Of course, the invention is not limited to a four line sequence; it is possible that a 2, 4, 6, 8, or more line sequence will be effective.

The advantage of this copy protection method is that the so called PAL ID pulse pattern generated by the +/- 45 degree from the U axis is unchanged. The television receiver is not affected by the changes of the phase angles relative to the V axis as shown in Figures 8A to 8D. However, the color time base processing in a recording VCR is distributed by such a variation from the standard signal. Variations of this embodiment may include phase angle changes other than 90 degrees, so long as the PAL ID pulse is not disturbed.

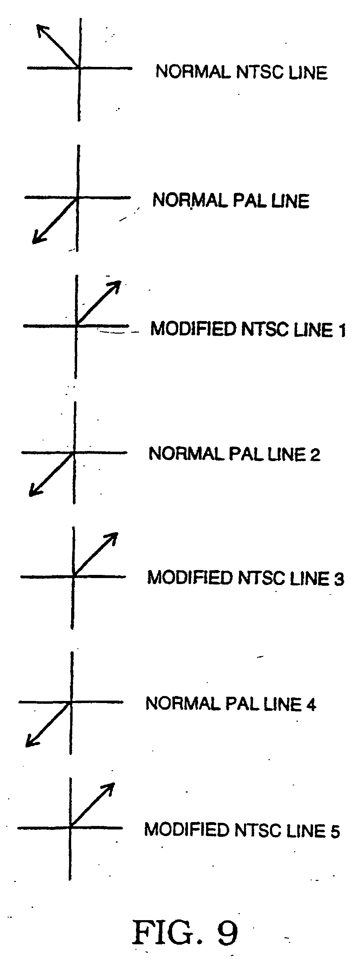

Another embodiment, as shown in the vector diagrams of Figure 9, has a one line modification of the color burst signal in between lines having the normal color burst signal. It has been found through experimental testing that the playability of the modified signal may be improved by using variations of a one line version of the signal modification. As an example, in a five line portion of a field, the first line may be a modified NTSC line, followed by an unmodified PAL line, followed by a modified NTSC line, followed by an unmodified PAL line, and followed by another modified NTSC line. This five line sequence is shown as the last five lines of Figure 9. The five line sequence may also have modified PAL lines with unmodified NTSC lines. The line sequence may also have a lower number of lines than five, or a greater number of lines than five. It has been found that there is a need for approximately 34 line groups of unmodified lines for TV monitor playability purposes.

An advantage of this copy protection method is that the so called PAL ID pulse pattern generated by the +/- 45 degree from the U axis is unchanged. The television receiver is not affected by the changes of the phase angles relative to the V axis which are illustrated in Figures 8A to 8D. However, the color time base processing in a recording VCR causes color phase errors by such a variation from the standard signal. Variations of this embodiment may include phase angle changes other than 90 degrees, so long as the PAL ID pulse is not disturbed.

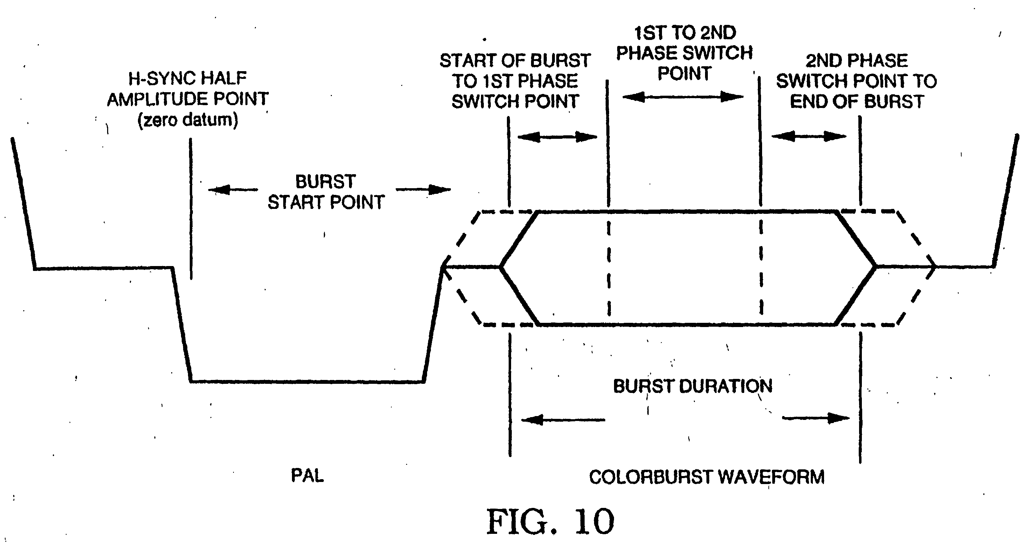

Table 2a and Figure 10 show an example of color stripe measurements for PAL. Table 2b shows both line number configurations. In Table 2a, the line numbers indicate the first line of a two or three line sequence. In the two line sequence, there are two lines containing modified color burst followed by 32 lines of unmodified color burst. In the three line sequence, there are three lines containing modified color burst followed by 31 lines of unmodified color burst. Other combinations are possible. The example has been determined experimentally to provide an optimal mix between playability and effectiveness.

**TABLE 2a**

| Summary of 625/50/PAL Measurements | |
|---|---|
| Parameter | Measurement (∓S) |
| Burst Normal Start Point (Colorstripe Line) | 5.6 ±0.15 (Note 1) |
| Burst Advanced Start Point (Colorstripe Line) | 4.96 ±0.15 |
| Envelope Rise Time 10% - 90% | 0.3 +0.1/-0.2 |
| Burst Start to First Phase Switch Point | 1.185 ±0.07 |
| First to second phase switch points | 0 |
| Second Phase Switch Point to end of burst | 1.185 ±0.15 (Note 1) |
| Envelope Fall Time 10% - 90% | 0.3 +0.1/-0.2 |
| Note 1:Start and End points must be such that total burst duration for the default configuration is 2.25 +0.15/-0.07 | |

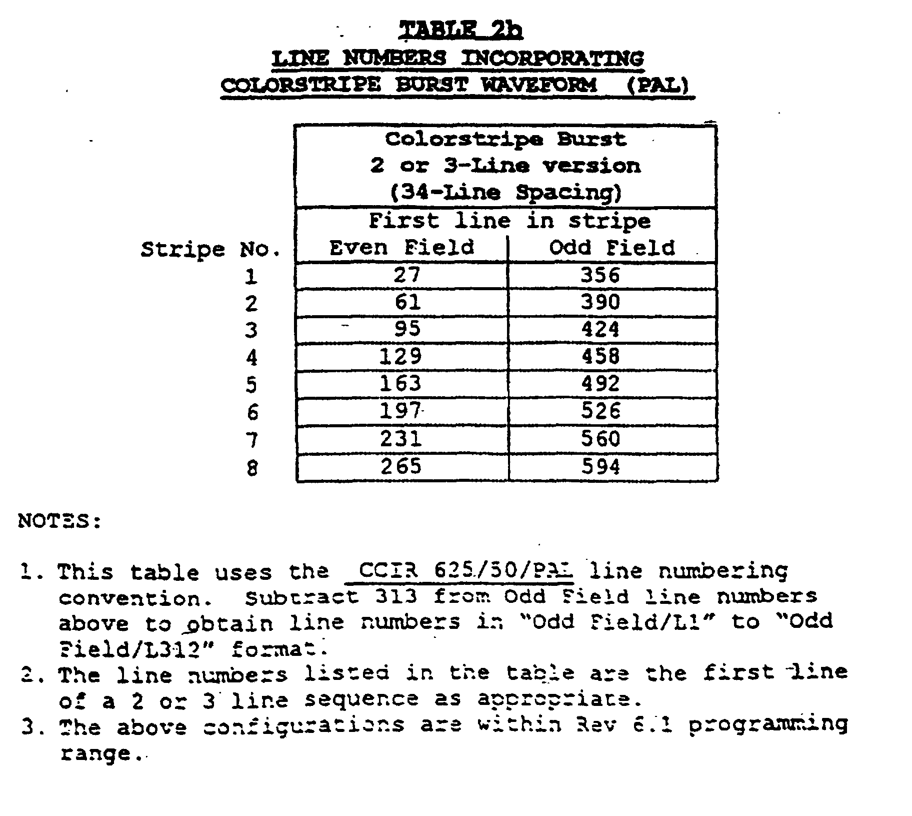

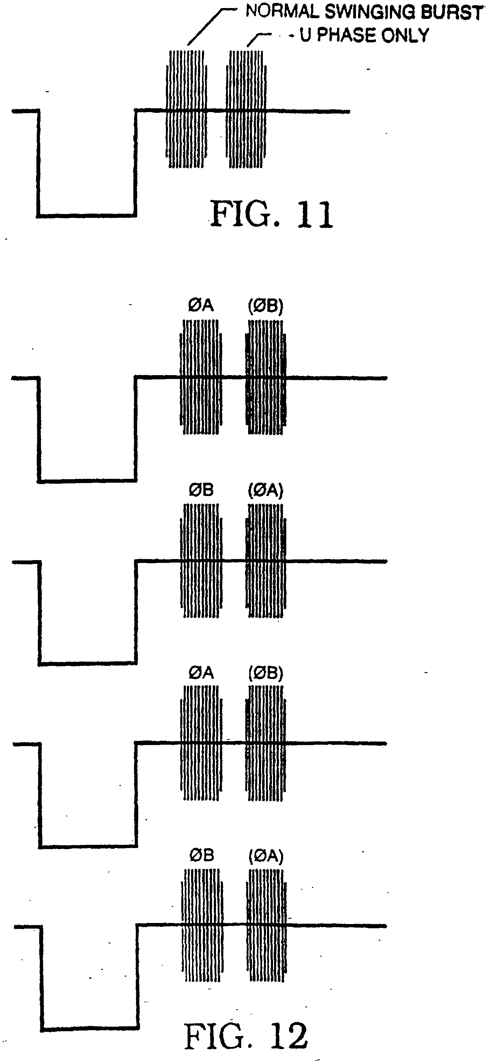

Figure 11 shows another embodiment for a PAL color stripe system. This embodiment includes the split-burst concept with the modified portion in the later portion of a normal color burst envelope. The phase of the modified area is a O° or at-U relative to the average position of the normal PAL burst phase signals. In embodiments described above, the modified phase angle did not disturb the so called PAL ID pulse in the modified area. In this embodiment, the PAL pulse is maintained in the unmodified portion, whereas the color subcarrier phase is disturbed by the modified color burst having a phase angle 180° away (opposite) from the average value of the swinging burst. This embodiment is an effective copy protection system.

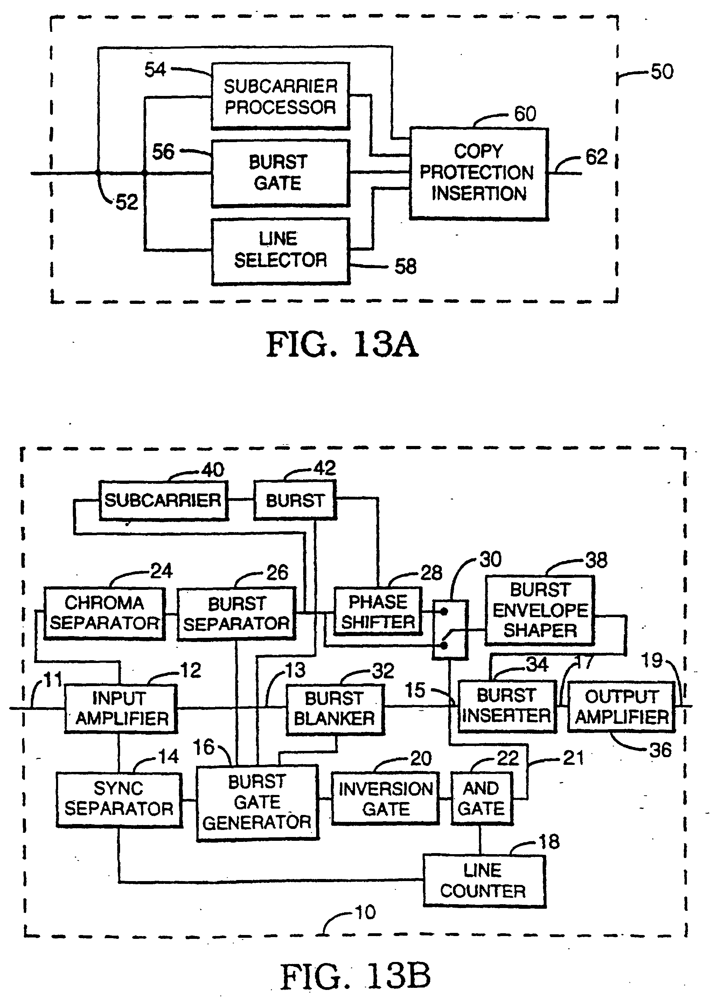

Figure 12 shows another example of a PAL color stripe system. This embodiment includes the split-burst concept with the modified portion in the later portion of a normal color burst envelope. The phase angle of the unmodified area is the normal swinging burst angle for the particular line. The modified portion has a phase angle set to be 180° from the swinging burst angle [ØA or ØB] of the opposite swinging burst angle [(ØB) or (ØA)]. For example in line 1 as shown in Figure 11, the unmodified burst ar p has the normal swinging burst angle, (135°) and the modified burst area has an angle of 45° (180° from the 225° angle of the opposite line's swinging burst). In line 2 of the sequence, the unmodified burst is at its normal 225° angle. The modified portion has a burst phase angle of 335° (180° from the 135° angle of the opposite line's swinging burst).

In the earlier embodiments, the modified phase angle did not disturb the so called PAL ID pulse in the modified area. In this embodiment, the PAL pulse is maintained in the unmodified portion, whereas the color subcarrier phase is disturbed by the modified color burst having a phase angle 180° away from the average value of the swinging burst. This embodiment is an effective copy protection system.

In each of the embodiments described above involving an advanced or extended color burst envelope, the lines with normal burst signals throughout the burst envelope have a normal burst width. However, the invention is not limited to the use of normal burst widths. There may be conditions where all lines with a color burst signal will contain advanced and extended burst envelopes whether the burst has any phase modification or not.

It is additionally possible to modify the horizontal sync width and/or position. One example would be to narrow the sync width by 1 to 2 µsecs. and fill the extended blanking area with extended burst. Another example is to widen the horizontal sync by 1 to 2 µsecs. and fill the extended horizontal sync with extended burst. Another variation is to move the leading edge of horizontal sync by 1 to 2 µsecs. and then to fill the extended back porch with the modified color burst. Each of these additional examples is designed to improve playability whilst having a minimal effect on the effectiveness of the copy protection.

Digital video tape recorders and digital play back devices are now becoming commercially available for consumer use. To maintain compatibility with analog video broadcast signals and analog video tape recorders, these consumer digital video tape recorders and digital playback devices are generally "hybrid" digital and analog systems. Such systems have the capabilities of current analog video cassette recorders to record and playback analog signals, whilst also having equivalent digital capabilities. Thus, these new hybrid digital tape recorders have the capability to convert input analog signals into digital signals, and to record the digital signals as a digital data stream on tape or disc. During playback, the digital data stream from the tape or disc will be available both as a digital signal for display by a digital television set (not currently available) and as a conventional analog video signal (such as the NTSC signal used in the United States. In this respect, the hybrid digital tape recorder internally converts incoming analog signals to digital, and the digital data stream, to analog. The capability of such a device to convert received analog signals to a digital data stream will be important because currently there are no sources (either tape or broadcast) of digital video program material available to consumers.

Such hybrid video recorders employ a "consumer" digital recording format differing from the standards of present professional digital systems. Such a digital video recorder may include a conventional "front end" RF tuner and also an RF modulator on the output side, as do present conventional analog VCRs. (By analog video here is meant NTSC, PAL, SECAM or YC.) The digital recording standard for consumers is essentially a data structure that represents the video signal as a stream of (binary) data bits along with suitable error concealment encoding, together with a physical tape standard.

Since digital video tape or disc recorders and digital playback devices will be capable of high fidelity reproduction which in turn will encourage copying, it is important to design such recorders for consumer use to inhibit or discourage unauthorized recording. It is important to prevent use of recorders for illegally duplicating copyrighted video material, and also to prevent the play back of such illegally duplicated material. Currently available analog video copy protection techniques are not useful in the digital domain, and there is therefore a need for a copy protection system suitable for use with such hybrid digital and analog video tape recorders, where the material recorded on the tape is a digital data stream. A typical situation to be prevented is the use of a hybrid video tape recorder to copy an output signal from a conventional copy protection process applied to it. The problem is to prevent the new hybrid digital-analog video tape recorder from copying the material from such a tape. Otherwise, the existence of such hybrid recorders would encourage copyright infringement.

An example of a hybrid digital video recording system is described in US-A-5315448.

It is proposed to embed color stripe technology, together with other copy protection technology, into an integrated circuit. This other copy protection technology may be as described in US-A- 4631603 and US-A-4819098. The integrated circuit includes a digital to analog converter to convert the digital video stream to an analog video stream which is encoded into an NTSC, PAL, or YC format. The copy protection technology is added in the encoder stage and combined with the encoded output. The technology used in the integrated circuits is usually of the ASIC variety using multitudes of gates to produce the desired copy protection output waveform.

Three specific applications for such an integrated circuit incorporating the copy protection technology are the digital video disc players and recorders, digital video cassette players and recorders, and digital set-top boxes used in the cable industry and satellite to home industry. For these specific applications, the integrated circuit is programmable to permit change of the waveform parameters. In the case of a transmission system, the bits to change the default values of the waveform are transmitted with the signal. In the case of a DVD player/recorder, and of a digital video cassette player/recorder the bits are included within the disc or cassette tape. Figure 13A shows a general block diagram of such an integrated circuit implementing embodiments described herein. A second apparatus embodiment is shown in Figure 13B.

In general, apparatus to produce the various color stripe embodiments described above comprises a subcarrier processor, a burst gate generator, and a line generator.

Figure 13A illustrates an example of a copy protection apparatus 50 to produce a color stripe signal as described. The circuit 50 has an unmodified video input signal 52 which may be a NTSC or PAL analog signal, or a digital data stream, representing a video signal to be copy protected. The input signal is input to a copy protection inserter 60, a subcarrier processor 54, a burst gate generator 56, and a line selector 58. The subcarrier processor 54 detects the color burst signal within the video input signal 52 and generates a 3.58 MHz. or a 4.43 MHz. subcarrier (depending on whether it is processing an NTSC or a PAL signal).

The burst gate generator 56 is programmed to generate the appropriate gating signals for the copy protection inserter 60 to instruct the copy protection inserter to insert a normal phase subcarrier or a modified phase subcarrier.

The line selector 58 is programmed to instruct the burst gate generator 56 and the copy protection inserter 60 as to which lines are to produce a modified burst and which lines are to reproduce the burst signal present on the video input signal 52. The apparatus 50 may be combined with appropriate circuitry to produce the pseudo-sync AGC pulse pairs described in US-A-4631603.

Figure 13B illustrates an apparatus 10 to implement a color stripe system as described. A composite video signal 11 is input to an input amplifier 12. The amplifier 12 sets the level of the video signal to an appropriate value for the subsequent elements of the color stripe system 10.

A first output of the input amplifier 12 is coupled to a sync separator 14. The sync separator 14 removes the horizontal and vertical synchronizing signals from the composite video 11. Outputs of the sync separator 14 are coupled to inputs of a burst gate generator 16 and a line counter 18. The burst gate generator 16 uses the horizontal and vertical synchronizing pulses from the sync separator 14 to produce a burst gate signal. In the NTSC format, the normal burst gate signal would begin approximately 5.3 microseconds after the leading edge of horizontal sync and end after the equivalent of 9 cycles of subcarrier (2.52 microseconds). The burst gate generator 16 is programmed to produce a widened burst gate on those lines where an advanced and/or extended burst gate is desired. The line counter 18 uses the horizontal and vertical synchronizing pulses from the sync separator 14 and is programmed to determine which lines will contain the color stripe information. The line counter 18 determines which lines will have a widened burst gate. In this respect, the output of the line counter 18 provides one input to an And gate 22 which produces a control signal 21 for control of a switch 30 as described further below. In one embodiment the ratio of lines having the color stripe signal to those not having the color stripe signal is 4/16. That is four lines out of twenty in each field have the color stripe signal. Additionally, the line count is arranged so that comparable lines in each field contain the color stripe signal. This pairing up of the color stripe portions increases the visibility of the color stripe in the playback of the recorded signal.

A first output of the burst gate generator 16 is coupled to an inversion gate 20 which determines the portions of the color burst signal which will contain phase inverted color burst. The inversion gate 20 may be programmed to provide for inverted color burst phase in one or more parts of the color burst signal as shown in the various embodiments above.

A second output of the input amplifier 12 is coupled to a chroma separator 24. The output of the chroma separator 24 comprises the chroma information and high frequency luminance information within the video signal. Since there is no luminance information during the color burst portion, there is only chroma information during the color burst portion, there is only chroma information during the color burst portion of the output of the chroma separator 24. The output of the chroma separator 24 is coupled to a burst separator 26. The burst separator 26 also has a burst gate input from the burst gate generator 16. The output of the burst separator 26 contains only the color burst signal retrieved from the input signal 11 by way of the chroma separator 24 and burst separator 26.

The color burst signal from the burst separator 26 is coupled to a subcarrier oscillator 40 to produce a subcarrier signal synchronous with the' incoming burst signal (3.58 MHz. in NTSC and 4.43 MHz in PAL). The output of the subcarrier oscillator 40 is coupled to a burst generator 42. The burst generator 42 also receives a burst gate signal from the burst gate generator 16. The width of the burst signal generated by the burst generator 42 is determined by the burst gate generator 16. This may be varied by the combination of burst gates on lines having no modification and being of one width, and the lines with burst modification having a different width. These variations are determined by a combination of the burst gate generator 16 and the line counter 18.

The output of the burst generator 42 is coupled to a phase shifter 28. The output of the burst separator 26 is applied to the first input of a switch 30. In the NTSC system, the phase modification is generally 180°. In the PAL format, the phase shifter 28 may have an input from the line counter 18 to instruct the phase inverter to produce different phase modifications on different lines as discussed above. Generally the phase modification in PAL is +90° on some lines and -90° on other lines. The output of the phase shifter 28 is coupled to a second input of the switch 30. Inversion gate 20 and line counter 18 are coupled to And gate 22 to produce a control signal 21. When the And gate 22 produces a signal indicating no burst phase modification requirement, the control signal 21 places the switch 30 in a position to pass normal color burst. When the And gate 22 produces a signal indicating a need for color burst phase modification, the control signal 21 causes the switch 30 to pass inverted color burst. The output of the switch 30 may be coupled to a first input of the burst inserter 34. However, generally, the output of the switch 30 is applied to a burst envelope shaper 38 as illustrated.

A third output of the input amplifier 12 containing the processed input signal is coupled to an input of a burst blanker 32. Another output of the burst gate generator 16 is coupled to the burst blanker 32. Burst blanker 32 blanks out all color burst information from the video signal 13 using the burst gate signal from the burst gate generator 16. The output of the burst blanker 32 containing video signal 15 is input to the burst inserter 34. As discussed above video signal 15 has no color burst information. The output of the switch 30 contains the color stripe color burst generated by a combination of elements 24, 26, 28, 12, 14, 16, 18, 20, 22 and 30.

It has been determined in experimental testing that the effectiveness and playability of the modified signal are affected by the shape of the color burst waveform. Therefore, the output of the switch 30 is coupled to the burst envelope shaper 38 which controls the rise and fall time of the color burst waveform. The output of the burst envelope shaper 38 is coupled to the burst inserter 34. The burst inserter 34 inserts the color stripe color burst into the video signal 15, which contains no color burst information, to produce a composite video signal containing the improved color stripe color burst and its related composite video information.

The output of the burst inserter 34 is coupled to an output amplifier 36. The output amplifier 36 provides the appropriate signal processing to produce a composite video signal 19 with the correct levels and output impedance for use in a video signal.

A method and apparatus for inhibiting the making of an acceptable video recording of a video signal as described and illustrated herein is described and claimed in EP 0875116 from which the present application is divided.

It will be appreciated that modifications in, and variations to, the embodiments described and illustrated may be made within the scope of the appended claims.

## Claims

1. A method of inhibiting the making of an acceptable video recording of a PAL video signal, the video signal including a plurality of video lines, each video line including a color burst having a predetermined duration and phase, the method being **characterized by** the steps of:
modifying the phase of the color burst so that the average of the phase vectors of a plurality of lines having said modified signals is nearly 180° opposite the average of the phase vectors of a plurality of lines having the proper color burst signals, whereby making of an acceptable video recording of the video signal is inhibited.

2. A method as claimed in Claim 1, wherein the steps of modifying the phase of the color burst further comprises the step of:
modifying an NTSC burst of said PAL video signal by -90°.

3. A method as claimed in Claim 1, wherein the step of modifying the phase of the color burst comprises the step of:
modifying a PAL burst of said PAL signal by +90°.

4. Apparatus for restricting analog recording of a digital video signal which has been pre-recorded on a medium and is played back and output as an encoded analog video signal, the apparatus being **characterized by**:
an integrated circuit implementation to add copy-prevention signals whose phases are controlled so that the average of the phase vectors of proper color burst signals that are originally placed on a plurality of lines is nearly 180° opposite the average of the phase vectors of modified color burst signals in a plurality of lines for a plurality of consecutive lines of said analog video signal.

## Patentansprüche

1. Verfahren zum Verhindern der Herstellung einer akzeptablen Videoaufzeichnung eines PAL-Videosignals, wobei das Videosignal eine Vielzahl von Videozeilen aufweist, von denen jede einen Farb-Burst mit einer vorgegebenen Dauer und Phase hat, wobei das Verfahren **gekennzeichnet ist durch** die Schritte:
Modifizieren der Phase des Farb-Bursts, so daß das Mittel der Phasenvektoren einer Mehrzahl von Zeilen, die die modifizierten Signale aufweisen, näherungsweise 180° entgegengesetzt zu dem Mittel der Phasenvektoren einer Mehrzahl von Zeilen ist, die richtige Farb-Burst-Signale haben, wodurch die Herstellung einer akzeptablen Videoaufzeichnung des Videosignals verhindert wird.

2. Verfahren nach Anspruch 1, wobei die Schritte der Modifizierung des Phasenvektors des Farb-Bursts ferner den Schritt umfassen:
Modifizieren eines NTSC-Bursts des PAL-Videosignals um -90°.

3. Verfahren nach Anspruch 1, wobei der Schritt des Modifizierens der Phase des Farb-Bursts den Schritt umfaßt:
Modifizieren eines PAL-Bursts des PAL-Signals um +90°.

4. Vorrichtung zum Beschränken analoger Aufzeichnung eines digitalen Videosignals, das auf einem Medium aufgezeichnet ist und abgespielt wird und als ein kodiertes analoges Videosignal ausgegeben wird, wobei die Vorrichtung **gekennzeichnet ist durch**:
einen integrierten Schaltungsaufbau zum Hinzufügen von Kopierverhinderungssignalen, deren Phasen so gesteuert sind, daß das Mittel der Phasenvektoren von richtigen Farb-Burst-Signalen, die ursprünglich in einer Vielzahl von Zeilen plaziert sind, näherungsweise um 180° entgegengesetzt zum Mittel der Phasenvektoren von modifizierten Farb-Burst-Signalen in einer Vielzahl von Zeilen über eine Vielzahl von aufeinanderfolgenden Zeilen des analogen Videosignals ist.

## Revendications

1. Procédé pour inhiber la réalisation d'un enregistrement vidéo acceptable d'un signal vidéo PAL, le signal vidéo comprenant une pluralité de lignes vidéo, chaque ligne vidéo comprenant une salve de couleur ayant une durée et une phase prédéterminées, le procédé étant **caractérisé par** les étapes suivantes :
la modification de la phase de la salve de couleur de telle sorte que la moyenne des vecteurs de phase d'une pluralité de lignes comportant lesdits signaux modifiés soit opposée de quasiment 180° à la moyenne des vecteurs de phase d'une pluralité de lignes comportant les signaux de salve de couleur corrects, de façon à faire en sorte qu'un enregistrement vidéo acceptable du signal vidéo soit inhibé.

2. Procédé selon la revendication 1, dans lequel les étapes de modification de la phase de la salve de couleur comprennent de plus l'étape suivante :
la modification d'une salve NTSC dudit signal vidéo PAL de -90°.

3. Procédé selon la revendication 1, dans lequel l'étape de modification de la phase de la salve de couleur comprend l'étape suivante :
la modification d'une salve PAL dudit signal PAL de +90°.

4. Dispositif pour restreindre l'enregistrement analogique d'un signal vidéo numérique qui a été préenregistré sur un support et qui est lu et délivré en sortie sous la forme d'un signal vidéo analogique codé, le dispositif étant **caractérisé par** :
une réalisation à circuits intégrés pour ajouter des signaux de prévention contre la copie dont les phases sont contrôlées de telle sorte que la moyenne des vecteurs de phase de signaux de salve de couleur corrects qui sont disposés à l'origine sur une pluralité de lignes soit opposée de quasiment 180° à la moyenne des vecteurs de phase des signaux de salve de couleur modifiés dans une pluralité de lignes pour une pluralité de lignes consécutives dudit signal vidéo analogique.
